Europäisches Patentamt

European Patent Office

Office européen des brevets

(19)

(11) Veröffentlichungsnummer: **0 257 484**
**B1**

(12) # EUROPÄISCHE PATENTSCHRIFT

(45) Veröffentlichungstag der Patentschrift:
18.04.90

(51) Int. Cl.⁴: **F16K 17/38**

(21) Anmeldenummer: **87111812.1**

(22) Anmeldetag: **14.08.87**

(54) **Absperrarmatur für insbesondere Gasleitungen.**

(30) Priorität: **20.08.86 DE 8622317 U**

(43) Veröffentlichungstag der Anmeldung:
**02.03.88 Patentblatt 88/9**

(45) Bekanntmachung des Hinweises auf die Patenterteilung:
**18.04.90 Patentblatt 90/16**

(84) Benannte Vertragsstaaten:
**AT BE CH DE FR GB GR IT LI NL SE**

(56) Entgegenhaltungen:
**EP-A- 0 145 828**
**DE-U- 8 622 308**
**US-A- 4 193 416**

(73) Patentinhaber: **Streif, Hans, Via Pastura,**
**CH-6983 Magliaso/Lugano(CH)**

(72) Erfinder: **Müllers, Josef, Im Sandfeld 2,**
**D-4054 Nettetal 2(DE)**

(74) Vertreter: **Patentanwälte Dipl.-Ing. Alex Stenger**
**Dipl.-Ing. Wolfram Watzke Dipl.-Ing. Heinz J. Ring,**
**Kaiser-Friedrich-Ring 70, D-4000 Düsseldorf 11(DE)**

EP 0 257 484 B1

**Beschreibung**

Die Erfindung betrifft eine Absperrarmatur für insbesondere Gasleitungen, mit einem Armaturengehäuse mit Gaseintritt und Gasaustritt und mit einem Ventilsitz sowie mit einem gegen den Ventilsitz geführten Ventilschließkörper, wobei der Ventilschließkörper mittels zumindest einer Druckfeder beaufschlagt und in Schließstellung überführbar ist, und der Ventilschließkörper mittels einer Verriegelungseinrichtung gegen die Wirkung der Druckfeder in Offenstellung gehalten ist, und die Verriegelungseinrichtung mit dem aus einem Dehnstoffelement ausfahrbaren Bolzen gekoppelt und nach Überschreiten einer Temperatur vorgegebener Höhe von dem Bolzen in Entriegelungsstellung überführbar ist, und wobei das Dehnstoffelement auf der Außenseite des Armaturengehäuses angeordnet ist.

Ein ständiges Problem ist die Brandschutzsicherung von Gasleitungen bei der Gasversorgung von Haushalten. Denn regelmäßig werden die Gaszähler durch Brandeinwirkung derart beschädigt, daß das Gas unkontrolliert aus den Gasleitungen ausströmen kann und Explosionsgefahr verursacht. Aus der EP-A 0 145 825 ist eine Absperrarmatur der eingangs beschriebenen Ausführungsform bekannt, die bei ungewöhnlichem Temperaturanstieg infolge von Brandeinwirkung automatisch schließt und dadurch jeden unkontrollierten Gasaustritt unterbindet. Bei dieser bekannten Ausführungsform befindet sich jedoch der gesamte Verriegelungsmechanismus in dem Armaturengehäuse, so daß das Armaturengehäuse selbst nicht von dem Gas oder dgl. Medium durchströmt werden kann, dazu vielmehr ein besonderer Gaseintrittsstutzen und Gasaustrittsstutzen erforderlich sind. Aus diesem Grunde ist diese Absperrarmatur für den Einsatz in Hauptspeiseleitungen kaum geeignet. – Hier setzt die Erfindung ein.

Der Erfindung liegt die Aufgabe zugrunde, eine Absperrarmatur für insbesondere Gasleitungen der eingangs beschriebenen Art zu schaffen, die bevorzugt für den Einsatz in Hauptspeiseleitungen geeignet ist und dazu ein von dem betreffenden Medium durchströmbares Armaturengehäuse aufweist.

Diese Aufgabe löst die Erfindung bei einer gattungsgemäßen Absperrarmatur dadurch, daß die Druckfeder zwischen einer Schulter im Armaturengehäuse und einem in Verriegelungsstellung befindlichem Verriegelungsring eingespannt ist, daß der in dem Armaturengehäuse geführte Verriegelungsring an den Ventilschließkörper angeschlossen ist, daß der Verriegelungsring in Verriegelungsstellung mittels zumindest eines durch die Gehäusewand des Armaturengehäuses nach außen zurückdrückbaren Verriegelungselementes blockiert ist, daß das Verriegelungselement in Blockagestellung mittels eines auf der Außenseite des Armaturengehäuses geführten Sperrglieds gesperrt ist, und daß das Sperrglied mittels des Bolzens des Dehnstoffelementes in Freigabestellung zurückdrückbar ist. – Diese Maßnahmen der Erfindung haben zur Folge, daß sich in dem Armaturengehäuse selbst lediglich der Ventilsitz, der Ventilschließkörper, die Druckfeder und der Verriegelungsring befinden, während die übrigen Bauteile der Verriegelungseinrichtung und das die Verriegelungseinrichtung betätigende Dehnstoffelement auf der Außenseite des Armaturengehäuses angeordnet sind. Dadurch kann das Armaturengehäuse unmittelbar von Gas oder einem anderen Medium durchströmt werden. Folglich besteht im Rahmen der Erfindung die Möglichkeit, daß das Armaturengehäuse als ein in die Gasleitung einsetzbarer Rohrabschnitt ausgebildet und das Dehnstoffelement seitlich angesetzt ist. Insoweit lässt sich eine einbaufertige thermische Brandschutzsicherung verwirklichen, die für den Einsatz selbst in Hauptspeiseleitungen geeignet ist. Außerdem lässt sich die erfindungsgemäße Absperrarmatur unschwer mit einem Isolierteil und einer manuell zu betätigenden Absperrarmtur über Flanschverbindungen kombinieren. – Darin sind im wesentlichen die durch die Erfindung erreichten Vorteile zu sehen.

Weitere erfindungswesentliche Merkmale sind im folgenden aufgeführt. Um eine einwandfreie Führung des Ventilschließkörpers zu erreichen, lehrt die Erfindung, daß der Verriegelungsring an einen durch die Druckfeder hindurchgeführten Schaft des Ventilschließkörpers unmittelbar angeschlossen ist oder von der Druckfeder gegen in dem Armaturengehäuse geführte Leitflügel am Schaft angedrückt ist. Der Verriegelungsring weist zweckmäßigerweise einen Außenkonus auf, wobei das dagegen anliegende Verriegelungselement als Kugel oder Zylinder oder dgl. Wälzkörper ausgebildet ist. Der konische Verriegelungsring sorgt also infolge seiner Druckfederbelastung dafür, daß das Verriegelungselement durch die Gehäusewand hindurch – dort befindet sich eine entsprechende Öffnung – einwandfrei und schnell nach außen gedrückt wird, sobald das Sperrglied das Verriegelungselement freigibt. Dazu weist das Sperrglied erfindungsgemäß eine Ausnehmung zur Aufnahme des in die Blockagestellung zurückgedrückten Verriegelungselementes auf und ist in einer außenseitigen Führung geführt sowie einerseits von einer Rückstellfeder in Sperrstellung gedrückt, andererseits von dem Bolzen des Dehnstoffelementes beaufschlagt.

Im folgenden wird die Erfindung anhand einer lediglich ein Ausführungsbeispiel darstellenden Zeichnung näher erläutert; es zeigen:

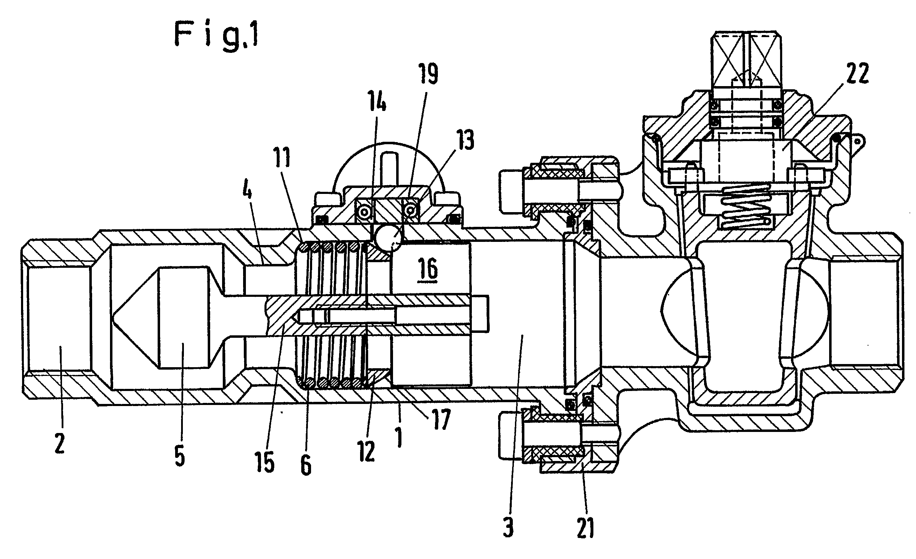

Fig. 1 eine erfindungsgemäße Absperrarmatur im Axialschnitt bei in Offenstellung befindlichem Ventilschließkolben sowie mit einer angeflanschten Isoliereinrichtung und manueller Absperreinrichtung;

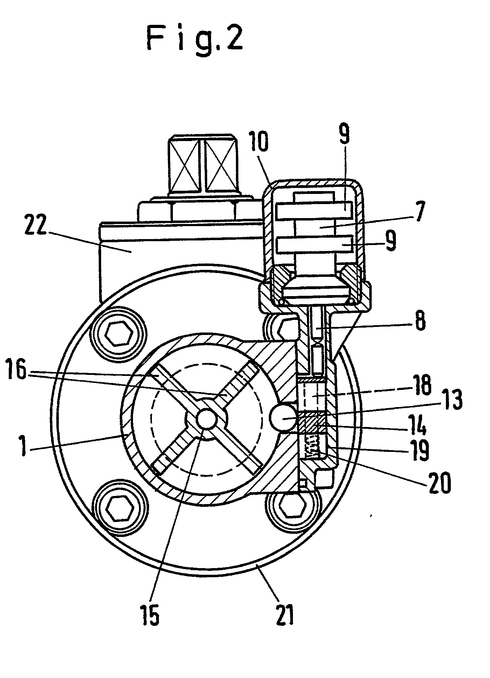

Fig. 2 einen Vertikalschnitt durch den Gegenstand nach Fig. 1 und

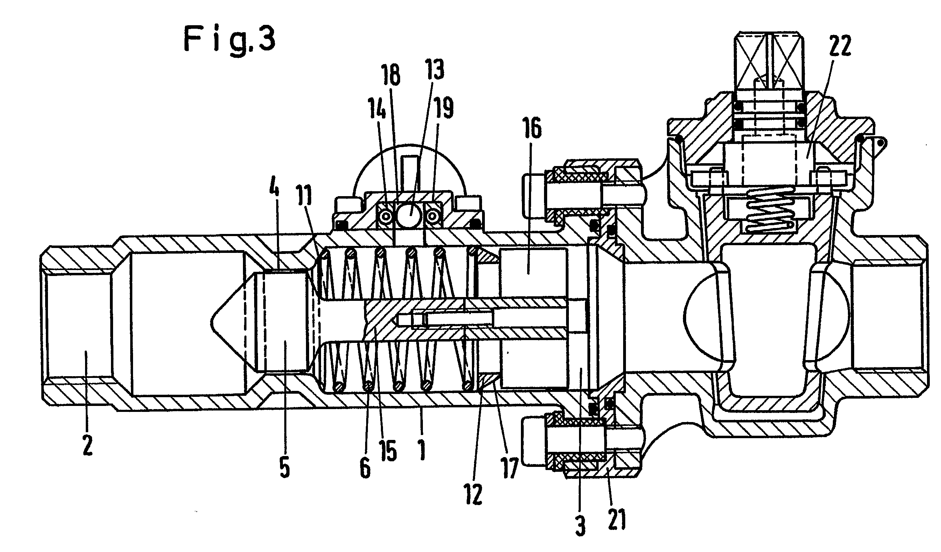

Fig. 3 einen Ausschnitt aus dem Gegenstand nach Fig. 1 bei in Schließstellung befindlichem Ventilschließkörper.

In den Figuren ist eine Absperrarmatur für insbesondere Gasleitungen, nämlich Hauptspeiseleitungen dargestellt und zwar mit einem Armaturengehäuse 1 mit Gaseintritt 2 und Gasaustritt 3 und mit einem Ventilsitz 4 zwischen Gaseintritt 2 und Gasaustritt 3 sowie mit einem gegen den Ventilsitz 4 geführten Ventilschließkörper 5, wobei der Ventilschließkörper 5 mittels zumindest einer Druckfeder 6 beaufschlagt und in Schließstellung überführbar ist. Ferner ist der Ventilschließkörper 5 mittels einer Verriegelungseinrichtung gegen die Wirkung der Druckfeder 6 in Offenstellung gehalten. Die Verriegelungseinrichtung ist mit dem aus einem Dehnstoffelement 7 ausfahrbaren Bolzen 8 gekoppelt und nach Überschreiten einer Temperatur vorgegebener Höhe von dem Bolzen 8 in Entriegelungsstellung überführbar. Das Dehnstoffelement 7 befindet sich auf der Außenseite des Armaturengehäuses 1. Nach dem Ausführungsbeispiel handelt es sich um eine Dehnstoffpatrone mit zwei übereinander angeordneten Wärmeleitkörpern 9. Die Wärmeleitkörper 9 weisen sternartig angeordnete Wärmeleitrippen auf und sind von einer Schutzkappe 10 aus wärmeleitfähigem Material umgeben. – Die Druckfeder 6 ist zwischen einer Schulter 11 im Armaturengehäuse 1 und einem in Verriegelungsstellung befindlichem Verriegelungsring 12 eingespannt. Der in dem Armaturengehäuse 1 geführte Verriegelungsring 12 ist an den Ventilschließkörper 5 angeschlossen. Der Verriegelungsring 12 ist in Verriegelungsstellung mittels zumindest eines durch die Gehäusewand des Armaturengehäuses 1 nach außen zurückdrückbaren Verriegelungselementes 13 blockiert. Das Verriegelungselement 13 ist in Blockagestellung mittels eines auf der Außenseite des Armaturengehäuses 1 geführten Sperrgliedes 14 gesperrt. Das Sperrglied 14 ist mittels des Bolzens 8 des Dehnstoffelementes 7 in Freigabestellung zurückdrückbar. – Der Verriegelungsring 12 ist an einen durch die Druckfeder 6 hindurchgeführten Schaft 15 des Ventilschließkörpers 5 unmittelbar angeschlossen oder nach dem Ausführungsbeispiel von der Druckfeder 6 gegen in dem Armaturengehäuse 1 geführte Leitflügel 16 am Schaft 15 angedrückt. Der Verriegelungsring 12 weist einen Außenkonus 17 auf. Gegen den Außenkonus 17 liegt das Verriegelungselement 13 an, welches als Kugel oder dgl. Wälzkörper ausgebildet ist. Das Sperrglied 14 weist eine Ausnehmung 18 zur Aufnahme des in Deblockagestellung zurückgedrückten Verriegelungselementes 13 auf und ist in einer außenseitigen Führung 19 geführt. Ferner ist das Sperrglied 14 einerseits von einer Rückstellfeder 20 in Sperrstellung gedrückt, andererseits von dem Bolzen 8 des Dehnstoffelementes 7 entgegen der Wirkung der Rückstellfeder 20 beaufschlagt. Das Armaturengehäuse 1 ist als ein in die Gasleitung bzw. Hauptspeiseleitung einsetzbarer Rohrabschnitt ausgebildet, an dem das Dehnstoffelement 7 mit der Verriegelungseinrichtung seitlich angesetzt ist. An den Rohrabschnitt ist eine Isolierung 21 mit einer manuell zu betätigenden Absperrarmatur 22 angeflanscht.

## Patentansprüche

1. Absperrarmatur für insbesondere Gasleitungen mit einem Armaturengehäuse (1) mit Gaseintritt (2) und Gasaustritt (3) und einem Ventilsitz (4) sowie mit einem gegen den Ventilsitz (4) geführten Ventilschließkörper (5), wobei der Ventilschließkörper (5) mittels zumindest einer Druckfeder (6) beaufschlaft und in Schließstellung überführbar ist und der Ventilschließkörper (5) mittels einer Verriegelungseinrichtung gegen die Wirkung der Druckfeder (6) in Offenstellung gehalten ist, und die Verriegelungseinrichtung mit einem aus einem Dehnstoffelement (7) ausfahrbaren Bolzen (8) gekoppelt und nach Überschreiten einer Temperatur vorgegebener Höhe von dem Bolzen (8) in Entriegelungsstellung überführbar ist, und wobei das Dehnstoffelement (7) auf der Außenseite des Armaturengehäuses (1) angeordnet ist, dadurch gekennzeichnet, daß die Druckfeder (6) zwischen einer Schulter (11) im Armaturengehäuse (1) und einem in Verriegelungsstellung befindlichen Verriegelungsring (12) eingespannt ist, daß der in dem Armaturengehäuse (1) geführte Verriegelungsring (12) an den Ventilschließkörper (5) angeschlossen ist, daß der Verriegelungsring (12) in Verriegelungsstellung mittels zumindest eines durch die Gehäusewand des Armaturengehäuses (1) nach außen zurückdrückbarem Verriegelungselement (13) blockiert ist, daß das Verriegelungselement (13) in Blockagestellung mittels eines auf der Außenseite des Armaturengehäuses (1) geführten Sperrgliedes (14) gesperrt ist, und daß das Sperrglied (14) mittels des Bolzens (8) des Dehnstoffelementes (7) in Freigabestellung zurückdrückbar ist.

2. Absperrarmatur nach Anspruch 1, dadurch gekennzeichnet, daß der Verriegelungsring (12) an einem durch die Druckfeder (6) hindurchgeführten Schaft (15) des Ventilschließkörpers (5) unmittelbar angeschlossen ist oder von der Druckfeder (6) gegen in dem Armaturengehäuse (1) geführte Leitflügel (16) am Schaft (15) angedrückt ist.

3. Absperrarmatur nach Anspruch 1 oder 2, dadurch gekennzeichnet, daß der Verriegelungsring (12) einen Außenkonus (17) aufweist und daß das dagegen anliegende Verriegelungselement (13) als Kugel oder Zylinder oder dgl. Wälzkörper ausgebildet ist.

4. Absperrarmatur nach einem der Ansprüche 1 bis 3, dadurch gekennzeichnet, daß das Sperrglied (14) eine Ausnehmung (18) zur Aufnahme des in Deblockagestellung zurückgedrückten Verriegelungselementes (13) aufweist und in einer außenseitigen Führung (19) geführt sowie einerseits von einer Rückstellfeder (20) in Sperrstellung gedrückt ist, andererseits von dem Bolzen (8) des Dehnstoffelementes (7) beaufschlagt ist.

## Revendications

1. Robinet d'isolement, notamment pour conduites de gaz, comprenant un corps de robinet (1) avec une entrée de gaz (2) et une sortie de gaz (3), un siège d'obturation (4) ainsi qu'un corps d'obturation (5) guidé par rapport au siège d'obturation (4), le corps d'obturation (5) étant sollicité par au moins un ressort de pression (6) et pouvant être amené en position de fermeture, ce corps d'obturation (5) étant par ailleurs maintenu en position d'ouverture, à l'encontre de l'action du ressort de pression (6), au moyen d'un système de verrouillage qui est couplé à un poussoir (8) sortant d'un élément s'allongeant par dilatation (7), et qui après dépassement d'une température prédéfinie, est amené dans sa position de déverrouillage par l'intermédiaire du poussoir (8), l'élément (7) s'allongeant par dilatation étant agencé sur le côté extérieur du corps de robinet (1), ce robinet étant caractérisé en ce que le ressort de pression (6) est enserré entre un épaulement (11) dans le corps de robinet (1) et un anneau de verrouillage (12) se trouvant en position de verrouillage, en ce que cet anneau de verrouillage (12), guidé dans le corps de robinet (1), est relié au corps d'obturation (5), et est bloqué en position de verrouillage à l'aide d'au moins un élément de verrouillage (13) pouvant être repoussé vers l'extérieur au travers de la paroi du corps de robinet (1), en ce que l'élément de verrouillage (13) est arrêté dans sa position de blocage au moyen d'un organe d'arrêt (14) guidé sur le côté extérieur du corps de robinet (1), et en ce que l'organe d'arrêt (14) peut être repoussé dans sa position de libération à l'aide du poussoir (8) de l'élément (7) s'allongeant par dilatation.

2. Robinet d'isolement selon la revendication 1, caractérisé en ce que l'anneau de verrouillage (12) est raccordé directement à une tige (15) du corps d'obturation (5), traversant le ressort de pression (6), ou est appliqué par le ressort de pression (6), contre des ailettes directrices (16) sur la tige (15), guidées dans le corps de robinet (1).

3. Robinet d'isolement selon la revendication 1 ou 2, caractérisé en ce que l'anneau de verrouillage (12) présente un cône extérieur (17) et en ce que l'élément de verrouillage (13) venant s'y appliquer est constitué d'une bille ou d'un cylindre, ou autre corps de roulement analogue.

4. Robinet d'isolement selon l'une des revendications 1 à 3, caractérisé en ce que l'organe d'arrêt (14) présente un évidement (18) destiné à loger l'élément de verrouillage (13) repoussé dans sa position de déblocage, et en ce que l'organe d'arrêt est guidé dans une glissière extérieure (19) tout en étant, d'une part, poussé vers sa position d'arrêt par un ressort (20), et d'autre part, sollicité par le poussoir (8) de l'élément (7) s'allongeant par dilatation.

**Claims**

1. A line shutoff fitting, more particularly for gas lines, the fitting having a casing (1) with a gas inlet (2) and a gas outlet (3), a valve seat (4) and a valve lid (5) guided relatively to the valve seat (4), the lid (5) being acted on and being movable into the closed position by means of at least one compression spring (6) and being kept open by a latching device against the force of the spring (6), the latching device being coupled with pin (8) adapted to be moved out by an expansion element (7) and to be changed over by the pin (8) into the release position after a predetermined temperature has been exceeded, the expansion element (7) being disposed on the outside of the casing (1), characterised in that the compression spring (6) is engaged between a shoulder (11) in the casing (1) and a locking ring (12) which is in the locking position, the locking ring (12) is guided in the casing (1) and connected to the valve lid (5), the locking ring (12) when in the locking position is locked by means of at least one locking element (13) adapted to be pushed back outwardly by the wall of the casing (1), the locking element (13) when in the locking position is closed by means of a locking member (14) guided on the outside of the casing (1), and the locking member (14) can in the release position be pressed back by means of the pin (8).

2. A fitting according to claim 1, characterised in that the locking ring (12) is directly connected to a valve lid stem (15) which extends through the spring (6) or is pressed thereby towards guide vanes (16) which are disposed on the stem (15) and which are guided in the casing (1).

3. A fitting according to claim 1 or 2, characterised in that the locking ring (12) has an outside cone (17) and the locking element (13) engaging such cone is a sphere or cylinder or similar rolling member.

4. A fitting according to any of claims 1–3, characterised in that the locking member (14) is formed with a recess (18) to receive the locking element (13) when the same has been pressed back into the release position, is guided in an external guide (19), is pressed into the locking position by a return spring (20) and is acted on by the pin (8).

Fig.1

# Fig.2

# Fig.3

EP 0 257 484 B1